# EUROPÄISCHE PATENTSCHRIFT

(11) **EP 1 841 638 B1**
(45) Veröffentlichungstag und Bekanntmachung des Hinweises auf die Patenterteilung: **26.08.2009**
(21) Anmeldenummer: 06706328.9
(22) Anmeldetag: 20.01.2006
(51) Int. Cl.: B62D 25/00, B62D 21/09, B62D 27/02

(54) **KAROSSERIE-BAUTEIL EINES KRAFTFAHRZEUGES**
BODY COMPONENT OF A MOTOR VEHICLE
COMPOSANT DE CARROSSERIE D'UN VEHICULE

(30) Priorität: 28.01.2005 DE 102005003978
(43) Veröffentlichungstag der Anmeldung: 10.10.2007
(73) Patentinhaber: Bayerische Motoren Werke Aktiengesellschaft, 80809 München (DE)
(72) Erfinder: BREM, Erich, 86415 Mering (DE); FUERST, Oliver, 85521 Ottobrunn (DE); OANCEA, Nikolaus, 80939 München (DE)
(74) Vertreter: Günther, Hans Peter
(86) Internationale Anmeldenummer: PCT/EP2006/000495
(87) Internationale Veröffentlichungsnummer: WO 2006/079482

(56) Entgegenhaltungen:
- EP-A- 1 454 819
- WO-A-98/21060
- DE-A1- 10 003 878
- DE-A1- 10 238 668
- US-A1- 2004 113 461

## Beschreibung

Die Erfindung betrifft ein Karosserie-Bauteil eines Kraftfahrzeuges gemäß dem Oberbegriff des Anspruchs 1.

Aus der DE 196 48 164 ist bereits ein Profilrahmenträger bekannt, bei dem ein geschlossener Querschnitt durch Profile gebildet ist, die an ihren Flanschen miteinander verbunden sind. Zur Erhöhung der Steifigkeit ist in einem durch die Profile gebildeten Hohlraum ein rohrförmiges Verstärkungsteil angeordnet. Zusätzlich ist der Zwischenraum zwischen dem rohrförmigen Verstärkungsteil und den dazu gegenüberliegenden Innenflächen der Profile mit einem metallischen Schaumwerkstoff ausgefüllt.

Aus der WO 98/21060 A und der US 2004/113461 A1 ist jeweils ein Karosserie-Bauteil eines Kraftfahrzeuges bekannt, das die Merkmale des Oberbegriffs des Anspruchs 1 aufweist. Bei der WO 98/21060 A soll ein Bauteil geschaffen werden, das bei einer hohen Steifigkeit ein geringes Gewicht hat. Aus der US 2004/113461 A1 ist ein Preßformteil bekannt, dessen Steifigkeitsverteilung durch Härtemaßnahmen, insbesondere durch Induktionshärten, erreicht wird.

Aufgabe der Erfindung ist es, ein Karosserie-Bauteil eines Kraftfahrzeuges zu schaffen, das eine hohe Steifigkeit aufweist und das einfach herzustellen ist.

Diese Aufgabe wird durch die Merkmale des Anspruchs 1 gelöst.

Bei dem erfindungsgemäßen Karosserie-Bauteil ist an einer Innenfläche eines außenliegenden Profils ein hochfestes Verstärkungs-Profilbauteil angeordnet, dessen geometrische Abmessungen den geometrischen Abmessungen des Profils in einem vorbestimmten Umfang entsprechen. Das außenliegende Profil befindet sich in der Regel auf der Seite der Karosserie, an der die höchste Belastung aufzunehmen ist. Aufgrund dieser Bauweise ist es möglich, dass das außenliegende Profil mit einem kleineren Radius hergestellt werden kann. Durch die Aufteilung dieser beiden miteinander verbundenen, erfindungsgemäßen Profile in ein außenliegendes Profil, das den Designanforderungen entsprechend gestaltet werden kann und in ein inneres Verstärkungsprofil, das entsprechend der erforderlichen Steifigkeit ausgelegt ist, ist im Vergleich zu einer herkömmlichen Bauweise eine höhere Festigkeit bei gleichem Bauraum erreichbar. Durch die Anordnung des erfindungsgemäßen Verstärkungsprofils kann demzufolge das separate rohrförmige Verstärkungsbauteil wegfallen, so dass bei dem erfindungsgemäßen Karosserie-Bauteil das Gewicht und der Herstellungsaufwand verringert ist.

Das erfindungsgemäße Verstärkungsprofil besteht aus einem hochfesten Werkstoff, dessen Streckgrenze 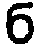 ₛ bei 300 N/mm² < 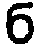 ₛ ≤ 2000 N/mm² liegt.

Die Befestigung des außenliegenden Profils mit dem Verstärkungsprofil erfolgt in einer Ausführungsform durch eine Verbindung an Flanschen, die an den Außenrändern der beiden Profile ausgebildet sind.

In einer vorteilhaften Ausführungsform erfolgt die Verbindung des außenliegenden Profils mit dem Verstärkungsprofil durch eine flächige Verklebung der beiden Profile. Dadurch ergibt sich ein Sandwich-Bauteil, das eine noch höhere Festigkeit hat, als dies bei einer Verbindung nur an den Profil-Außenflanschen der Fall ist.

In einer weiteren vorteilhaften Ausführungsform erfolgt die Befestigung zwischen dem außenliegenden Profil und dem Verstärkungsprofil durch eine Kombination einer Verbindung der beiden Flansche, beispielsweise durch ein Verschweißen der beiden Flanschen, und durch ein flächiges Verkleben der beiden Profile. Aus Festigkeitsgründen kann in einer vorteilhaften Ausführungsform abschnittsweise eine Befestigung zwischen den beiden Profilen nur durch ein Verkleben oder nur durch ein Verschweißen oder durch eine Kombination der beiden Verbindungsmöglichkeiten erfolgen.

In einer weiteren vorteilhaften Ausführungsform ist ein Hohlraum zwischen dem Verstärkungsprofil und einem dazu beabstandeten Profil mit einem Schaumwerkstoff vollständig oder abschnittsweise ausgefüllt. Der verwendete Schaumwerkstoff weist in einer vorteilhaften Ausführungsform ein hohes Schubmodul auf, das beispielsweise entsprechend der zu erwartenden Belastung ausgelegt ist.

Das beabstandete, nicht verstärkte Profil ist in einer Ausführungsform mit dem außenliegenden Profil und dem Verstärkungsprofil an den Außenflanschen miteinander verbunden.

Als Werkstoff für das Verstärkungsprofil kann vorteilhafterweise ein hochfester Stahl oder ein kohlenstoffverstärkter Kunststoff verwendet werden.

Der Werkstoff des außenliegenden, verstärkten Profils, mit dem das Verstärkungsprofil verbunden ist, weist in einer Ausführungsform eine Streckgrenze 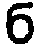 ₛ auf, die 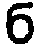 ₛ ≤ 260 N/mm² beträgt. Das dem erfindungsgemäßen Verstärkungsprofil gegenüberliegende, nicht verstärkte Profil weist in einer Ausführungsform eine Streckgrenze 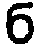 ₛ auf, die bei 600 N/mm² < 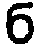 ₛ ≤ 2000 N/mm².

Das erfindungsgemäße Karosserie-Bauteil ist im Prinzip bei allen Profilen einsetzbar, die Kräfte aufnehmen müssen. Diese Profile können die jeweiligen Karosserie-Säulen, Stoßfänger, die beiden seitlichen Schweller, sowie Querträger und Längsträger sein. Das erfindungsgemäße Karosserie-Bauteil kann auch bei designunabhängigen Bauteilen, wie den Motorträgern oder den Längsträgern an der Bodengruppe, eingesetzt werden.

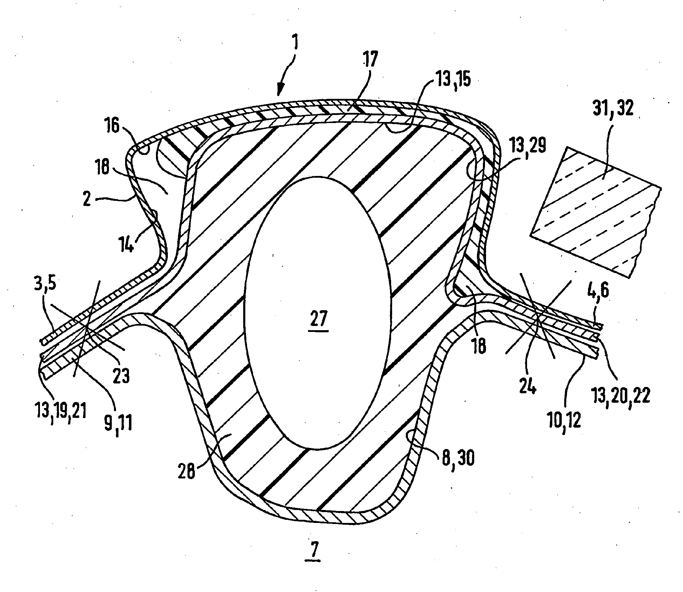

Eine Ausführungsform der Erfindung wird nachstehend anhand der einzigen Figur beispielhalber beschrieben, die einen Querschnitt eines prinzipiellen Aufbaus des Karosserie-Bauteils zeigt.

Die Querschnittsansicht der einzigen Figur zeigt ein Karosserie-Bauteil 1, das in der gezeigten Ausführungsform eine A-Säule ist. Ein vom Fahrzeuginnenraum 7 abgewandtes, außenliegendes, hutförmiges Profil 2 weist an seinen Außenrändern 3, 4 Befestigungsflansche 5, 6 auf. Ein zum Fahrzeuginnenraum 7 zeigendes inneres Profil 8 weist ebenfalls an seinen Außenrändern 9, 10 Befestigungsflansche 11, 12 auf. Ein drittes Profil 13 ist als ein Verstärkungsprofil ausgebildet. Oberhalb des Befestigungsflansches 6 des außenliegenden Profils 2 ist ein Rand 31 einer Frontscheibe 32 dargestellt.

Das Verstärkungsprofil 13 weist an seinen Außenrändern 19, 20 jeweils einen Befestigungsflansch 21, 22 auf. In der gezeigten Ausführungsform sind die Befestigungsflansche 5, 21, 11 und 6, 22, 12 der Profile 2, 13 und 8 über beispielsweise Schweißpunkte 23, 24 miteinander verbunden.

Die geometrischen Abmessungen des dritten Profils 13 stimmen zumindest mit den geometrischen Abmessungen des außenliegenden Profils 2 an gegenüberliegenden, flächigen Abschnitten 15, 16 überein. Dadurch kann der in Richtung einer Innenfläche 14 des außenliegenden Profils 2 zeigende, flächige Abschnitt 15 des Verstärkungsprofils 13 an dem dazu gegenüberliegenden flächigen Abschnitt 16 des außenliegenden Profils 2 über einen Klebstoff 17 verklebt werden.

Ein Auffangbereich 18 zwischen den beiden Profilen 2 und 13 ist so ausgebildet, dass sich der Klebstoff 17 gleichmäßig zwischen dem Profil 2 und dem Profil 13 verteilen kann und überschüssiger Klebstoff 17 in den Auffangbereich 18 austreten kann.

Das Verstärkungsprofil 13 und das dazu beabstandete innere Profil 8 umschließen einen Hohlraum 27, der in der gezeigten Ausführungsform zumindest teilweise mit einem Schaumwerkstoff 28 ausgefüllt ist, der einen hohen Schubmodul aufweist. In der gezeigten Ausführungsform ist der Schaumwerkstoff 28 mit einer vorbestimmten Mindestdicke an den Innenflächen 29 und 30 des Verstärkungsprofils 13 und des Profils 8 ausgebildet.

## Patentansprüche

1. Karosserie-Bauteil (40) eines Kraftfahrzeuges, bei dem durch mindestens zwei an ihren Befestigungsflanschen (52) miteinander verbundenen Profile (42, 44) ein geschlossener Hohlraum gebildet ist und mit einem Verstärkungselement (46), das in dem Hohlraum angeordnet ist,
wobei das Verstärkungselement ein Verstärkungsprofil (46) ist, das an einem entsprechend der Belastung zu verstärkenden Profil (42, 44) der Karosserie befestigt ist,
wobei die geometrischen Abmessungen des Verstärkungsprofils (46) mit den geometrischen Abmessungen des zu verstärkenden Profils (44) zumindest an gegenüberliegenden Abschnitten übereinstimmen
und wobei das Verstärkungsprofil (46) aus einem hochfesten Werkstoff besteht, dessen Streckgrenze 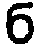 ₛ bei 300 N/mm² < 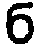 ₛ ≤ 2000 N/mm²
liegt,
**dadurch gekennzeichnet, dass** das zu dem Verstärkungsprofil (13) beabstandete, nicht zu verstärkende Profil (8) eine Streckgrenze 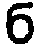 ₛ aufweist, die bei 600 N/mm² < 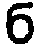 ₛ ≤ 2000 N/mm² liegt und dass die Streckgrenze 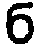 ₛ des mit dem Verstärkungsprofil (13) verbundenen, zu verstärkenden Profils (2)
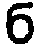 ₛ ≤260 N/mm² beträgt.

2. Karosserie-Bauteil nach Anspruch 1,
**dadurch gekennzeichnet, dass** die Profile (2, 13, 8) des Karosserie-Bauteils (1) an ihren Befestigungsflanschen (5, 21, 11 und 6, 22, 12) miteinander verbunden sind.

3. Karosserie-Bauteil nach Anspruch 1,
**dadurch gekennzeichnet, dass** zumindest ein flächiger Abschnitt (16) des zu verstärkenden Profils (2) mit dem dazu gegenüberliegenden flächigen Abschnitt (15) des Verstärkungsprofils (13) durch einen Klebstoff (17) miteinander verbunden ist.

4. Karosserie-Bauteil nach Anspruch 1,
**dadurch gekennzeichnet, dass** die Profile (2, 13, 8) des Karosserie-Bauteils (1) an ihren Befestigungsflanschen (5, 21, 11; 6, 22, 12) miteinander verbunden sind und dass das zu verstärkende Profil (2) und das Verstärkungsprofil (13) zusätzlich über mindestens jeweils einen flächigen Abschnitt (15, 16) miteinander verklebt sind.

5. Karosserie-Bauteil nach einem der vorhergehenden Ansprüche,
**dadurch gekennzeichnet, dass** die Profile (2, 8, 13) des Karosserie-Bauteils (1) aus einem metallischen Werkstoff oder aus einem Kunststoff hergestellt sind.

6. Karosserie-Bauteil nach Anspruch 5,
**dadurch gekennzeichnet, dass** das Verstärkungsprofil (13) ein warmumgeformter, hochfester Stahl ist.

7. Karosserie-Bauteil nach Anspruch 5,
**dadurch gekennzeichnet, dass** das Verstärkungsprofil (13) ein kohlenstoffverstärkter Kunststoff ist.

8. Karosserie-Bauteil nach einem der vorhergehenden Ansprüche,
**dadurch gekennzeichnet, dass** ein Hohlraum (27) zwischen dem Verstärkungsprofil (13) und dem dazu beabstandeten, nicht zu verstärkenden Profil (8) mit einem Schaumwerkstoff (28) ausgefüllt ist, der einen hohen Schubmodul aufweist.

9. Karosserie-Bauteil nach einem der vorhergehenden Ansprüche,
**dadurch gekennzeichnet, dass** das Karosserie-Bauteil (1) bei allen Profilen einsetzbar ist, die Kräfte aufnehmen.

10. Karosserie-Bauteil nach einem der vorhergehenden Ansprüche,
**dadurch gekennzeichnet, dass** das Karosserie-Bauteil (1) bei den Karosserie-Säulen und/oder bei den seitlichen Schwellern und/oder bei sich in Längs- und Querrichtung erstreckenden Trägern und/oder bei Überrollbügeln eingesetzt ist.

## Claims

1. A body part (40) of a motor vehicle, wherein at least two profiles (42, 44) connected to one another at their fastening flanges (52) form a closed cavity, also comprising a reinforcing element (46) disposed in the cavity, wherein the reinforcing element is a reinforcing profile (46) fastened to a body profile (42, 44) requiring reinforcement in accordance with the load, wherein the geometrical dimensions of the reinforcing profile (46) coincide with the geometrical dimensions of the profile (44) requiring reinforcement, at least at opposite portions, and
wherein the reinforcing profile (46) is made of a high-strength material having an elastic limit 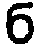 ₛ of between 300 N/mm² < 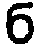 ₛ ≤ 2000 N/mm², **characterised in that** the profile (8) remote from the reinforcing profile (13) and not requiring reinforcement has an elastic limit 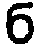 ₛ of 600 N/mm² < 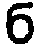 ₛ ≤ 2000 N/mm² and the elastic limit 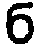 ₛ of the profile (2) connected to the reinforcing profile (13) and requiring reinforcement is 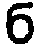 ₛ ≤ 260 N/mm².

2. A body part according to claim 1,
**characterised in that** the profiles (2, 13, 8) of the body part (1) are connected together at their reinforcing flanges (5, 21, 11 and 6, 22, 12).

3. A body part according to claim 1,
**characterised in that** at least one flat portion (16) of the profile (2) requiring reinforcement is connected to the opposite or facing flat portion (15) of the reinforcing profile (13) by an adhesive (17).

4. A body part according to claim 1,
**characterised in that** the profiles (2, 13, 8) of the body part (1) are connected together at their reinforcing flanges (5, 21, 11; 6, 22, 12) and the profile (2) requiring reinforcement and the reinforcing profile (13) are additionally stuck together via at least one flat portion (15, 16) in each case.

5. A body part according to any of the preceding claims,
**characterised in that** the profiles (2, 8, 13) of the body part (1) are made of a metal material or a plastics material.

6. A body part according to claim 5,
**characterised in that** the reinforcing profile (13) is made of a hot-formable, high-strength steel.

7. A body part according to claim 5,
**characterised in that** the reinforcing profile (13) is made of carbon-reinforced plastics material.

8. A body part according to any of the preceding claims,
**characterised in that** a cavity (27) between the reinforcing profile (13) and the spaced-apart profile (8) not requiring reinforcement is filled with a foam material (28) having a high shear modulus.

9. A body part according to any of the preceding claims,
**characterised in that** the body part (1) is of use with all profiles which receive force.

10. A body part according to any of the preceding claims,
**characterised in that** the body part (1) is usable on body columns and/or on the side sillboards and/or on bearers extending in the longitudinal and transverse direction and/or on roll bars.

## Revendications

1. Composant de carrosserie (40) d'un véhicule automobile dont au moins deux profils (42, 44) reliés l'un à l'autre par leur bride de fixation (52), forment une cavité fermée logeant un élément de renforcement (46),
l'élément de renforcement est un profil de renforcement (46) fixé à un profil (42, 44) de la carrosserie à renforcer en fonction de la charge,
les dimensions géométriques du profil de renforcement (46) correspondent aux dimensions géométriques du profil à renforcer (44), au moins au niveau des segments en regard, et
le profil de renforcement (46) est réalisé en un matériau très résistant, dont la limite d'allongement 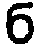 ₛ est telle que
300 N/mm² < 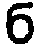 ₛ ≤ 2000 N/mm²,
**caractérisé en ce que**
le profil (8) écarté du profil de renforcement (13), et qui n'est pas lui-même à renforcer, a une limite d'allongement 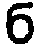 ₛ telle que 600 N/mm² < 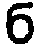 ₛ ≤ 2000 N/mm², et
la limite d'allongement 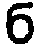 ₛ du profil à renforcer (2), relié au profil de renforcement (13) est telle que 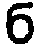 ₛ ≤ 260 N/mm².

2. Composant de carrosserie selon la revendication 1,
**caractérisé en ce que**
les profils (2, 13, 8) du composant de carrosserie (1) sont reliés l'un à l'autre au niveau de leurs brides de fixation (5, 21, 11 et 6, 22, 12).

3. Composant de carrosserie selon la revendication 1,
**caractérisé en ce qu'**
au moins un segment de surface (16) du profil à renforcer (2) est relié au segment de surface (15) en regard du profil de renforcement (13) par une liaison par un adhésif (17).

4. Composant de carrosserie selon la revendication 1,
**caractérisé en ce que**
les profils (2, 8, 13) du composant de carrosserie (1), sont reliés au niveau de leurs brides de fixation (5, 21, 11 ; 6, 22, 12), et
le profil à renforcer (2) et le profil de renforcement (13) sont en outre collés l'un à l'autre chaque fois par au moins un segment de surface (15, 16).

5. Composant de carrosserie selon l'une des revendications précédentes,
**caractérisé en ce que**
les profils (2, 8, 13) du composant de carrosserie (1), sont en un matériau métallique ou en une matière plastique.

6. Composant de carrosserie selon la revendication 5,
**caractérisé en ce que**
le profil de renforcement (13) est en acier très résistant formé à chaud.

7. Composant de carrosserie selon la revendication 5,
**caractérisé en ce que**
le profil de renforcement (13) est en une matière plastique renforcée par des fibres de carbone.

8. Composant de carrosserie selon l'une des revendications précédentes,
**caractérisé en ce qu'**
une cavité (27) entre le profil de renforcement (13) et le profil (8) écarté de celui-ci et qui n'est pas à renforcer, est remplie d'une mousse (28) ayant un module de glissement élevé.

9. Composant de carrosserie selon l'une des revendications précédentes,
**caractérisé en ce que**
le composant de carrosserie (1) est applicable à tous les profils soumis à des efforts.

10. Composant de carrosserie selon l'une des revendications précédentes,
**caractérisé en ce que**
le composant de carrosserie (1) est utilisé pour les colonnes de la carrosserie et/ou pour les seuils de porte latéraux et/ou pour les poutres s'étendant longitudinalement et transversalement et/ou pour les arceaux de retournement.
